# EUROPEAN PATENT SPECIFICATION

(11) **EP 1 806 875 B1**
(45) Date of publication and mention of the grant of the patent: **12.12.2007**
(21) Application number: 06290063.4
(22) Date of filing: 10.01.2006
(51) Int. Cl.: H04L 12/28, H04L 12/56, H04Q 7/38

(54) **Method and apparatus for providing call admission control**
Verfahren und Vorrichtung zur Rufzulassungssteuerung
Procédé et appareil pour contrôler l'admission d'appels

(43) Date of publication of application: 11.07.2007
(73) Proprietor: Alcatel Lucent, 75008 Paris (FR)
(72) Inventor: Meyer, Phillipe, 67118 Geispolsheim (FR); Lauriol, Jean-Michel, 67640 Fegersheim (FR)
(74) Representative: Schmidt, Werner Karl

(56) References cited:
- WO-A-02/07388
- US-A1- 2005 083 843
- BOGGIA G ET AL: "Feedback-based bandwidth allocation with call admission control for providing delay guarantees in IEEE 802.11e networks" COMPUTER COMMUNICATIONS, ELSEVIER SCIENCE PUBLISHERS BV, AMSTERDAM, NL, vol. 28, no. 3, 24 February 2005 (2005-02-24), pages 325-337, XP004749571 ISSN: 0140-3664

## Description

The present invention relates to a method of controlling call admission in a WLAN, as well as a call server of the WLAN for providing call admission control (WLAN = Wireless Local Area Network).

If a particular link in a packet based communication network is oversubscribed by influx of data traffic, a data congestion can be resolved by measures such as queueing, buffering, or packet drop. Data packets are simply held back until the data flow is smooth again. In the case of data drop, the target client simply requests a re-transmission of the missing packets. However, these measures cannot be applied in the case of real-time traffic, sensitive to both packet latency and packet loss, as the QoS would be severely decreased (QoS = Quality of Service).

Today, the voice QoS deployed on WLANs is based on proprietary solutions, such as SVP allowing to support voice prioritisation, power saving, and CAC (SVP = SpectraLink^{®} Voice Priority; CAC = Call Admission Control).

SVP is the de facto standard for QoS on Wi-Fi networks (Wi-Fi = Wireless Fidelity). Adopted by the leading WLAN access point providers, SVP enables converged voice and data applications on a single wireless network infrastructure. SVP favours isochronous voice packets over asynchronous data packets when contending for the wireless medium and when transmitting packets onto the wired LAN (LAN = Local Area Network). SVP is an open specification that is compliant with the IEEE 802.11b standard and represents a cooperative solution between VoWLAN phones, WLAN infrastructure, and a dedicated equipment named SVP server (IEEE = Institute of Electrical and Electronics Engineers; VoWLAN = Voice over WLAN).

CAC is a mechanism that prevents the presence of a new voice call from disrupting or degrading QoS for existing voice calls. In the case of delay-sensitive applications such as telephone calls or video-conferencing, it is a better solution to control and even deny network access to new calls under heavy load conditions. Otherwise, the newly admitted call would lead to a deteriorated transmission of all voice calls on the network.

The reason for this general deterioration is that if packets exceeding a configured or allowable rate are received, these packets are simply tail-dropped from the queue. The queueing mechanism is not able to distinguish which IP packet belongs to which voice call. As the queueing policy cannot be limited to the newly admitted voice call, any packet exceeding a given arrival rate within a certain period of time will be dropped. Thus, all calls will experience packet loss, which is perceived as clips by the end users.

In the SpectraLink architecture, CAC is managed between phones and the SVP server and is transparent for the WLAN infrastructure and the telephony call server. The main principles are as follows. The WLAN infrastructure, i.e. the Access Points (= AP), must implement a mechanism to prioritize voice traffic over data traffic. This is achieved by encapsulating the voice traffic in SRP PDUs exchanged between the WLAN telephone and the SVP server (SRP = SpectraLink Radio Protocol; PDU = Protocol Data Unit). The WLAN infrastructure uses the SRP protocol type to distinguish voice traffic from other traffics, and applies a higher priority to the voice traffic.

Through a configuration menu in the SVP server, the administrator sets a parameter which defines the maximum of simultaneous calls per AP. This value is common for all APs. During the boot process of a WLAN phone, the phone retrieves the BSSID of the AP which it is associated with through IEEE 802.11 standard messages (BSSID = Basic Service Set Identifier). During an audio call establishment between the phone and the SVP server, the phone sends this AP BSSID via the SRP protocol to the SVP server.

Therefore, the SVP server maintains a table including a list of APs associated with the on-going calls and can control the admission of calls to the APs. Each time the WLAN phone roams to a new AP, the table is updated via the same mechanism. When the maximum number of calls is reached on the AP the phone is currently associated with, the SVP server rejects any attempt to establish a new call over that particular AP. If the phone does not find any other available, i.e., not congested AP, a "network busy" message is displayed on the phone.

Thus, CAC is a proprietary solution requiring also SVP-compliant APs for voice prioritisation and dedicated equipment such as SVP servers. Extra processes such as test runs are needed before deployment since the maximum of simultaneous calls per AP have to be calibrated first.

Moreover, the current solution is based on static bandwidth reservation and traffic assumptions. It is not optimised for conditions when the traffic is different from the assumption. If real traffic is lower than assumed, the AP may accept more calls. On the other hand, if real traffic is higher than assumed, the AP may not be able to support the defined maximum number of calls. Voice traffic gets the priority over data traffic, thus data traffic would be limited but the maximum number of calls would be maintain. In addition, the maximum number of calls is global to all APs although traffic may be different at different locations.

Further, the current solution does not support emergency calls, i.e., there is no prioritisation of emergency calls over normal calls.

US 2005/0083843 describes a WLAN with additional reservation and processing means. The reservation means are preferentially implemented in each access point of the WLAN, the processing means in terminals. Thus, when a user signals to his terminal that he wants to establish a selected link, the processing means determine if said request meets predefined priority criteria. If so, the processing means associate to the request an authorization to use a section of bandwidth reserved for the transmission of requests to establish priority links. If the necessary bandwidth resources to establish the required link are available, the link is set up. If the necessary bandwidth resources are unavailable, a management module of an access point transmits to a call server a request to reallocate the resources used by a current link in favour of the priority link required.

WO 02/07388 A2 discloses a frame classifying technique for QoS in a WLAN, provided by a frame classification entity (= FCE) for a station in a basic service set (= BSS). The FCE classifies each received data frame to a VSID (= Virtual Stream identifier) by examining the data frame against a classification table. The QoS assigned to a data frame in the WLAN depends on the VSID associated with the data frame.

It is the object of the present invention to provide an improved call admission control.

The object of the present invention is achieved by a method of providing admission control of a call between a telephone of a first party associated with an access point of a packet-based wireless local area network and a telephone of a second party, whereby the method comprises the steps of receiving, at a call server of the wireless local area network, at least one notification message regarding the intended call; sending, from the call server to the telephone of the first party, a request to reserve bandwidth for the call at the access point; sending, from the telephone of the first party to the access point, a bandwidth request for the call; processing, at the access point, the received bandwidth request in dependence on the current traffic load of the wireless local area network; sending a response to the bandwidth request from the access point to the telephone of the first party; transmitting, from the telephone of the first party to the call server, a notification message to notify the call server about the result of the bandwidth reservation; initiating, by the call server, the establishment of a call between the telephone of the first party and the telephone of the second party if the requested bandwidth has been allocated to the call. The object of the present invention is further achieved by a call server of a packet-based wireless local area network for providing admission control of a call between a telephone of a first party associated with an access point of the packet-based wireless local area network and a telephone of a second party, whereby the call server comprises a control unit adapted to receive at least one notification message regarding the intended call; send to the telephone of the first party a request to reserve bandwidth for the call at the access point; receive from the telephone of the first party a notification message to notify the call server about the result of the bandwidth reservation; and initiate the establishment of a call between the telephone of the first party and the telephone of the second party if the requested bandwidth has been allocated to the call.

The invention concerns a method of providing call admission control in a WLAN comprising one or more access points and a call server. A WLAN telephone is associated with one of the one or more access points for wireless transmission of voice traffic between the telephone and the access points. The WLAN is also connected to one or more other telephony networks providing telephony service via a telephone terminal. If a user of the telephone wishes to establish a voice call to another party associated with the telephone terminal, the call admission according to the present invention relies on the IEEE 802.11e standard but is controlled by the call server.

Usually, the calling party's dialing is reported in several messages. These user actions are analysed by the call server that is then able to decide if these actions are related to the establishment of a call (normal call or emergency call) requiring the allocation of bandwidth at the WLAN infrastructure or not. The user actions may be related to the activation of a service not requiring bandwidth allocation since no voice channel is required for this service (e.g. call forwarding activation).

The present invention supports the CAC function on the basis of IEEE 802.11e standards, using features such as WMM and admission control (WMM = Wi-Fi Multimedia). This allows to have dynamic bandwidth management taking into account all kind of traffic, e.g., voice, data, etc. It solves the drawback of static bandwidth reservation with a SVP server.

The solution uses the bandwidth reservation mechanism as defined by IEEE 802.11e (TSPEC = Traffic Specification) wherein the bandwidth reservation mechanism is triggered by the call server in order to implement CAC. With the present invention, a real bandwidth reservation is performed.

Due to the ratification of the IEEE 802.11e standard, the proprietary solution based on SVP servers will no longer be necessary in the future for traffic prioritisation, power saving, and admission control. The present invention provides a succeeding solution to SVP.

The invention provides an "infra agnostic" solution for CAC. There is no direct interaction between a call server and a WLAN infrastructure for bandwidth reservation mechanisms. The WLAN infrastructure and a phone using the WLAN infrastructure have only to support standard IEEE 802.11e features. The solution is therefore applicable to any WLAN infrastructure compliant with IEEE 802.11e standards, in particular to any VoWLAN stimuli phone enabled to implement the dialog with the call server to receive bandwidth reservation requests and return the result of the actual bandwidth reservation at the WLAN infrastructure.

The present solution is adapted to support priority call. Priority calls, e.g., emergency calls, preempt WLAN resources already allocated to lower priority traffic in case of WLAN congestion. It is even possible to define more priority levels for voice traffic, e.g., providing a connection to Multi-Level Precedence and Preemption (= MLPP).

Moreover, the invention provides a flexible bandwidth reservation. It is possible to handle variable traffic load levels where traffic may be different at different locations, i.e., APs. This means that the maximum number of calls that can be supported by each AP can be different.

Further advantages are achieved by the embodiments of the invention indicated by the dependent claims.

According to a preferred embodiment of the invention, when receiving a new bandwidth reservation request and based on the priority of the call associated with the bandwidth reservation request, the AP should preempt resources allocated to lower priority traffic in case of congestion. When a party using a WLAN-related communication terminal, e.g., a VoWLAN-phone, dials a priority number such as an emergency number associated with the police, the calling party may expect the WLAN to process the urgent call with a higher priority than a normal subscriber conversation. The address information input by the calling party is transmitted to the call server.

The call server determines by analysis of the address information associated to a call whether a specific priority has to be assigned to the call, e.g., by analysing the telephone number dialled by the calling party. For example, the call server may refer to a data base comprising all telephone numbers relating to calls which have to be handled with a higher priority than usual telephone calls. In the case of a higher priority call request, the call server triggers the telephone of the calling party to request bandwidth with a priority as defined by the call server from the AP serving the calling party's telephone. When the AP receives the request, the AP checks the current traffic load situation of the traffic handled by the AP.

It is possible that the current load situation is low, i.e., that enough bandwidth is freely available. Then the bandwidth is readily allocated to the priority call. The allocated bandwidth must be tagged at the AP with the given priority in order not to be preempted for subsequent traffics with lower priority.

Alternatively, it is also possible that all bandwidth has been already allocated to previously requested calls. Then either it is possible to preempt bandwidth for the upcoming priority call from on-going calls of lower priority. However, if all previously requested calls are of the same or even higher priority, bandwidth cannot be preempted for the upcoming priority call and the upcoming priority call cannot be currently established over the current AP. Preferably, it is only in case bandwidth has been allocated to the upcoming priority call that the call is established by means of the call server. In any case, the result of a failed bandwidth reservation at the WLAN infrastructure must be reported to the call server that may decide of alternate actions.

According to another preferred embodiment of the invention, the establishment of a high priority call between a WLAN telephone of a first party and a telephone of a second party is performed even if no bandwidth is currently available and allocatable to the high priority call. It may be considered more important to provide a communication channel in the case of an emergency than to respect any QoS requirements. Thus, the priority call may be established by the call server at the risk of bad audio quality.

Preferably, the call server modifies the traffic specifications of a call to be set up if a call-related bandwidth request sent to the AP is denied. The call server may, e.g., change the VolP audio codec associated with the call. Consequently, the bandwidth resources required for the modified priority call may be lower than the bandwidth resources required for the original priority call. Therefore, in contrast to the original bandwidth request, the bandwidth resources currently available in the network may now be sufficient to provide service to the modified priority call with its reduced bandwidth requirements. After the modification is completed, the call server re-sends a request to reserve bandwidth for the modified priority call at the access point to the telephone of the first party.

According to another preferred embodiment of the invention, the call server may notify a local operator of a failed emergency call attempt of a party using a WLAN telephone if bandwidth allocation to a high priority call has been denied by the WLAN infrastructure, e.g., an AP. The notification provided by the call server to the operator may include address information of the telephone of the party, e.g., the telephone number associated with the telephone of the party. The notification message may also comprise a localisation information of the telephone of the party, e.g., an identifier or an address of an AP providing the telephone of the calling party with a connection to the WLAN.

In a preferred embodiment, the WLAN telephone of a communication party of an on-going call notifies the call server of any modification of the bandwidth resources allocated to the on-going call. For example, the on-going call is of normal priority. When a higher priority call is to be established, the call server may initiate the preemption for the high priority call from the AP. Then the AP may decide that the on-going normal call should be aborted in order to release the corresponding bandwidth resources for the high priority call.

Before a call is aborted, the call server must explicitely confirm and require the release of resources. Thus, the call server sends to the telephone of the party whose call is to be aborted, a request to release bandwidth resources allocated to the call at the access point. The telephone of the party whose call is to be aborted sends to the access point a bandwidth release request for the call. Usually, the access point will release the bandwidth resources allocated to the call and the call server will abort the call because the QoS can no longer be maintained.

When performing a communication via a WLAN, e.g., a VoWLAN telephone call, the user of the VoWLAN telephone may move within the coverage area of the WLAN. Therefore, the VoWLAN telephone may reach the border of the coverage area of a first AP and enter the coverage area of a second AP.

Consequently, a hand-over of the communication connection has to be performed from the first to the second AP during the on-going call with respective bandwidth requirements.

According to another preferred embodiment of the invention, the WLAN phone must also take into account the required bandwidth for the selection of a new AP during the hand-over in order to maintain the bandwidth required for the on-going calls and the agreed upon QoS. For example, the phone should not switch to an AP with a better RSSI but unable to provide the required bandwidth (RSSI = Received Signal Strength Indicator). This can be achieved by the phone by taking into account the QBSS load information as defined in the IEEE 802.11 standards in the AP selection algorithm (QBSS = QoS Basic Service Set). The QBSS is enabled to advertise channel load information in the beacon and probe response frames. Some IP phones use QBSS elements to determine which access point to associate to, based on the traffic load.

During hand-over the VoWLAN telephone should request the same bandwidth from the new AP than the bandwidth available on the old AP in order to maintain the same level of QoS. In this case the bandwidth reservation request is not triggered by the Call Server. The phone must notify the Call Server if the bandwidth could not be obtained at the new AP. If for any reason this bandwidth could not be obtained from the new AP, the call server must be notified that the bandwidth resources allocated to the on-going call have been modified in order to take appropriate actions (i.e., release the call because the QoS cannot be maintained).

Preferably, the communication between the telephone associated with the WLAN and the call server is done using an application layer protocol and the communication between the telephone associated with the WI AN and the AP serving the telephone is done using the IEEE 802.11e standard mechanism. Preferably, the application layer protocol is a telephone stimuli protocol. This protocol must be reliable, i.e., comprise a message acknowledgement.

Preferably, the control unit of the call server is enabled to send a notification message to the telephone of the first party without the need of prior bandwidth reservation. Thus, no bandwidth is required for notifications such as display messages and ringing within the wireless local area network using a telephony stimuli protocol, when not related to a call.

According to another preferred embodiment of the invention, the call server provides a feedback means for the calling party and called party, respectively, of a call via a WLAN network. The control unit of the call server sends a notification message to the telephone of the first party and/or the telephone of the second party in case of a call failure. The notification message may comprise a display message to be displayed at a terminal display of the telephones or a voice announcement to be played via the loudspeakers of the telephones. In case of call failure because the required bandwidth is not available, the notification to the first party may be different to the notification to the second party phone. On the first party's phone a voice announcement cannot be played since this is a voice flow and the bandwidth required to send this flow is not available. This restriction is not relevant for the second party phone.

These as well as further features and advantages of the invention will be better appreciated by reading the following detailed description of presently preferred exemplary embodiments taken in conjunction with accompanying drawings of which:
- Fig. 1: is a block diagram of a WLAN network according to an embodiment of the invention.
- Fig. 2: is a block diagram showing the communication platforms used for the bandwidth reservation according to another embodiment of the invention.
- Fig. 3: is a message sequence chart of an embodiment of the invention regarding successful bandwidth reservation for an outgoing normal call.
- Fig. 4: is a message sequence chart of an embodiment of the invention regarding successful bandwidth reservation for an outgoing emergency call.
- Fig. 5: is a message sequence chart of an embodiment of the invention regarding failed bandwidth reservation for an outgoing normal call.
- Fig. 6: is a message sequence chart of an embodiment of the invention regarding successful preemption for an outgoing emergency call.
- Fig. 7: is a message sequence chart of an embodiment of the invention regarding failed preemption for an outgoing emergency call.
- Fig. 8: is a message sequence chart of an embodiment of the invention regarding sucessful bandwidth reservation for an incoming call.

- Fig. 9: is a message sequence chart of an embodiment of the invention regarding failed bandwidth reservation for an incoming call.
- Fig. 10: is a message sequence chart of an embodiment of the invention regarding call server notification.
- Fig. 11: is a message sequence chart of an embodiment of the invention regarding a release of resources.

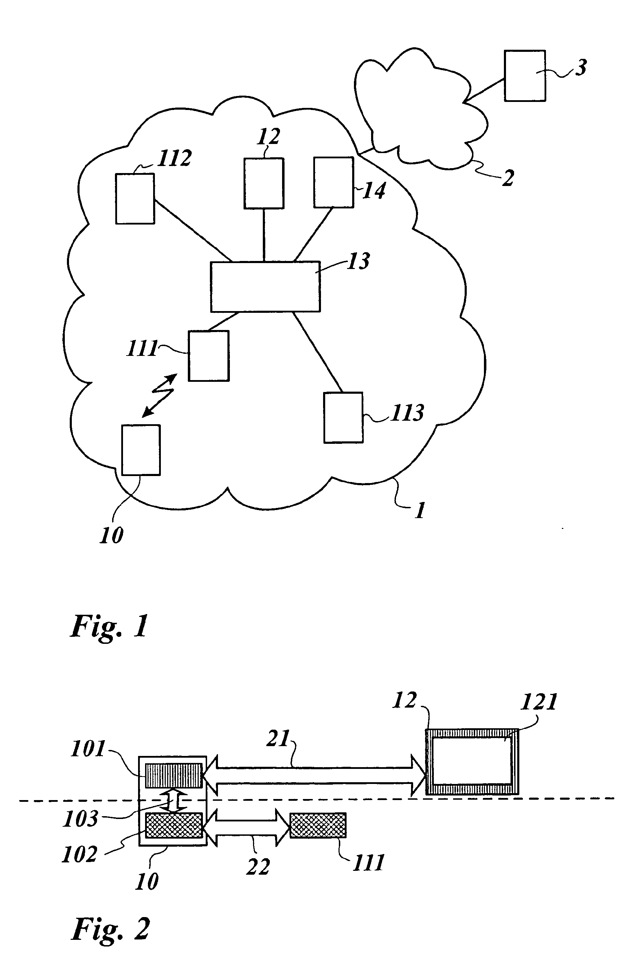

Fig. 1 shows a packet-based WLAN 1 comprising a wireless phone 10, APs 111, 112, 113, a switch 13, a call server 12, and a gateway 14. The gateway 14 connects the WLAN 1 with another telephony network 2 comprising a subscribed telephone terminal 3.

The wireless phone 10 may be any telephony device supporting standard IEEE 802.11 features, such as a VoWLAN telephone set or an appropriate softphone, e.g., a telephone software running on a desktop personal computer or a laptop, and is used by a first party who wishes to communicate via a telecommunications connection with a second party using the telephone terminal 3.

The telephone terminal 3 of the second party may be any kind of phone, an IP phone or a TDM phone behind a VolP gateway (TDM = Time Division Multiplexing). It may be connected on the same Local Area Network 1 than the first party's phone 10 or on another network 2. The telephone terminal 3 may even be another VoWLAN phone.

Each of the APs 111 to 113 provides access to the WLAN 1 within a geographic cell served by the APs 111 to 113. The phone 10 may be connected via a wireless connection to one of the APs 111 to 113 of the WLAN 1 when it is located in the corresponding geographical cell covered by the one of the APs 111 to 113. For example, at the current position shown in Fig. 1, the phone 10 may be connected to the AP 111. Each of the APs 111 to 113 is connected via a distribution system of a backbone network to the central switch 13, forming a WLAN infrastructure.

The central switch 13 provides switching functions in order to route an incoming or outgoing telephone call to an appropriate destination. In the sense of this description, the term "incoming call" refers to a call received by the wireless phone 10, while the term "outgoing call" refers to a call set up by the wireless phone 10. The call server 12 controls the set-up, performance and closing of telephony connections within the WLAN 1. The WLAN 1 is connected via a gateway 14 to another telephony network, e.g., a conventional PSTN, a mobile UMTS network or a wireline PABX (PSTN = Public Switched Telephone Network; UMTS = Universal Mobile Telecommunications System; PABX = Private Automatic Branch Exchange).

Fig. 2 shows the communication channels between the phone 10, the call server 12 and the AP 111. The phone 10 comprises an application platform 101 and a WLAN infrastructure platform 102 compliant with the IEEE 802.11e standard. The call server comprises a control unit 121 providing the functionality with regard to the CAC.

The basic idea of the invention is to use a bandwidth reservation mechanism as defined in the 802. 11e standard triggered by the call server 12 in order to implement CAC. The bandwidth reservation mechanism as defined in the 802.11 e standard is requested by the QoS enabled station (= QSTA), here the phone 10, from the QoS enabled AP, here the AP 111.

The bandwidth reservation requesred by the phone 10 is under the control of the call server 12 using the application layer protocol. When bandwidth of the WLAN 1 is required for a voice call coming into the WLAN 1 and destined to the phone 10 or for a voice call going out of the WLAN 1 and originating from the phone 10, the call server 12 triggers the phone 10 to request a reservation of the required bandwidth at the AP 111. The communication between the call admission control unit 121 of the call server 12 and the application interface 101 of the phone 10 is conducted using the application layer protocol 21.

The request is transmitted via channel 103 from the application platform of the phone 10 to the WLAN infrastructure platform 102 of the phone 10. Then the request is communicated from the phone 10 via the 802.11 e standard 22 to the AP 111. A priority matching the call priority, e.g., emergency call / normal call, is associated with the requested bandwidth.

The response to the request is transmitted via the 802.11e standard 22 from the AP 111 back to the phone 10, and the result of the bandwidth reservation performed by the AP 111 is reported via the application layer protocol 21 from the phone to the call server 12.

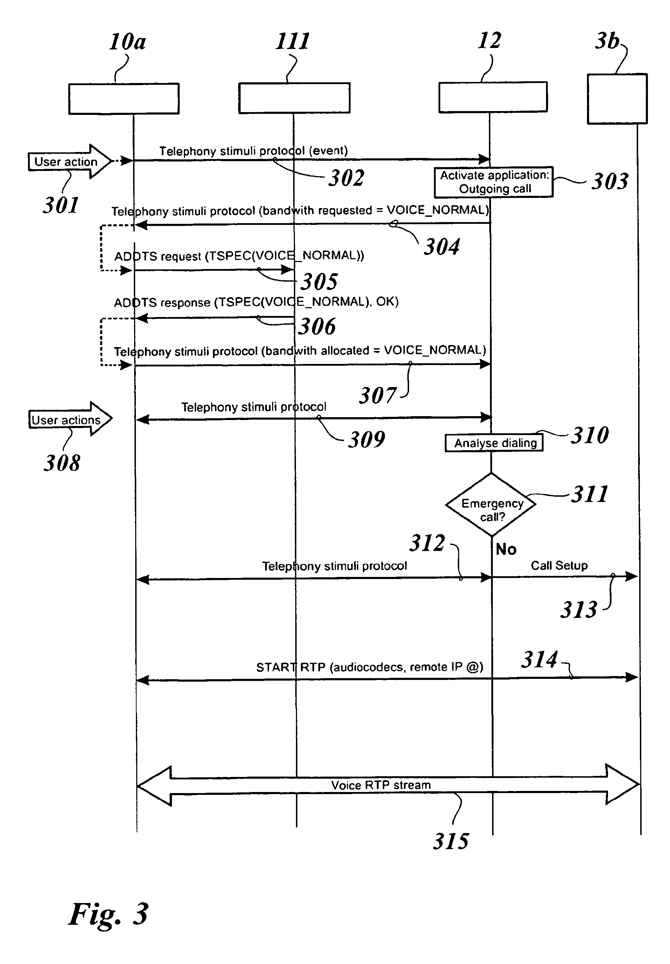

Fig. 3 describes the sequence of messages and actions of an embodiment of the invention regarding the successful bandwidth reservation for an outgoing normal call. The process is conducted among a WLAN-compatible phone 10a of a calling party, e.g., a VoWLAN phone associated with the WLAN network 1, a WLAN infrastructure AP 111, a call server 12, and a phone 3b of a called party, e.g., a PSTN phone or a UMTS cell phone.

The calling party associated with the phone 10a wishes to call the called party using the phone 3b in a normal voice call. To initiate the call, the calling party may hook off a handset of the phone 10a represented by, e.g., a hardphone, or initialise a software application of the phone 10a represented by, e.g., a softphone, or perform another appropriate user action 301 with regard to the phone 10a. The user action 301 at the phone 10a triggers a message 302 indicating the call initialisation event and sent from the phone 10a via a telephony stimuli protocol to the call server 12. In telephony, a stimulus protocol is a type of protocol that is used to carry event notifications between end points. Such a protocol is used to control the operation of devices at each end of the link. However a stimulus protocol is not sensitive to the system state. For example, MiNET^{®} is a stimulus protocol that carries keystroke information from a telephone set to a call control server.

The receipt of the message 302 at the call server 12 activates an application 303 of the call server 12, whereby the application 303 is associated with the request of an outgoing call.

The application 303 triggers a message 304 sent from the call server 12 via the telephony stimuli protocol to the phone 10a. The message 304 is adapted to cause the phone 10a to request bandwidth corresponding to a normal voice call from the WLAN infrastructure. Once the message 304 is received at the phone 10a, the phone 10a, triggered by the message 304, sends an ADDTS request 305 regarding the TSPEC corresponding to a normal call to the AP 111 (ADDTS = add TSPEC).

The bandwidth reservation mechanism uses the ADDTS request/Response frames as defined in the 802.11 e and in the WMM specifications from the Wi-Fi Alliance. According to the 802.11 standard, admission control is triggered by the use of a TSPEC. A station, here the phone 10a, specifies its traffic flow requirements (data rate, delay bounds, packet size, and others) and requests the QAP to create a TSPEC by sending the ADDTS management action frame. The QAP calculates the existing load based on the current set of issued TSPECs. Based on the current conditions, the QAP may accept or deny the new TSPEC request.

After receiving the ADDTS request 305, the AP analyses the current load situation. In the described embodiment, the load situation is low, so the AP 111 issues an ADDTS response 306 which indicates that the ADDTS request has been approved and correspondingly bandwidth has been allocated to a normal voice call originating from the phone 10a. The phone 10a receives the positive ADDTS response 306 and notifies the call server 12 by means of a message 307 sent via the telephony stimuli protocol that bandwidth has been allocated to the upcoming normal voice call.

As a next step 308, the calling party specifies address information associated with the telephone 3b of the called party. The calling party may dial a telephone number of the telephone 3b of the called party on a keypad of a hardphone, speak a telephone number into a microphone or use a computer mouse or a keyboard to input a telephone number of the called party. The telephone number of the called party is transmitted over a communication connection 309 via the telephony stimuli protocol from the phone 10a to the call server 12. After reception of the telephone number, the call server 12 performs an analysis 310 of the telephone number and performs a test 311 as to whether the telephone number is associated with a high priority call.

For the mentioned emergency test 311, the call server 12 may have access to a data base where high priority addresses are stored. When analysing and checking the received telephone number, the call server 12 accesses the data base and compares the received telephone number with the high priority addresses stored in the data base, e.g., telephone numbers of police, fire department, ambulance, road assistance, etc. When the received telephone number exists as an entry in the data base, the call server handles the call request with high or higher priority.

In the present embodiment, the analysis and test result is that the telephone number received from the calling party's phone 10a is not an emergency number and that the corresponding call to be established is not an emergency call or high priority call, respectively.

Accordingly, the call server 12 initiates the establishment and controlling of a normal voice call originating from the phone 10a by communication 312 with the phone 10a over the WLAN infrastructure via the telephony stimuli protocol. The call server 12 also performs a call set-up 313 to the called party's terminal 3b. In the next step, an RTP transmission between the calling party's phone 10 and the called party's phone 3b is initialised by transmitting messages 314 comprising, e.g., audiocodecs for the adjustment of equivalent transmission parameters from the call server 12 to the calling party's phone 10a and the called party's phone 3b and by establishing an RTP communication connection (RTP = Real-Time Transport Protocol). Finally, the call is conducted as voice RTP streams 315 of normal priority transmitted between the calling party's phone 10a and the called party's phone 3b.

In the infrastructure of the WLAN network 1, all call-related traffic through the WLAN 1 after the message 305, i.e., after the AP 111 receives the request of the normal voice call, is handled on a "normal voice" basis. Before the message 305, traffic is handled on a "best effort" basis. The default QoS afforded to a general packet-based communications link is termed "best effort" where network elements forward packets on a first come-first served basis without any preference.

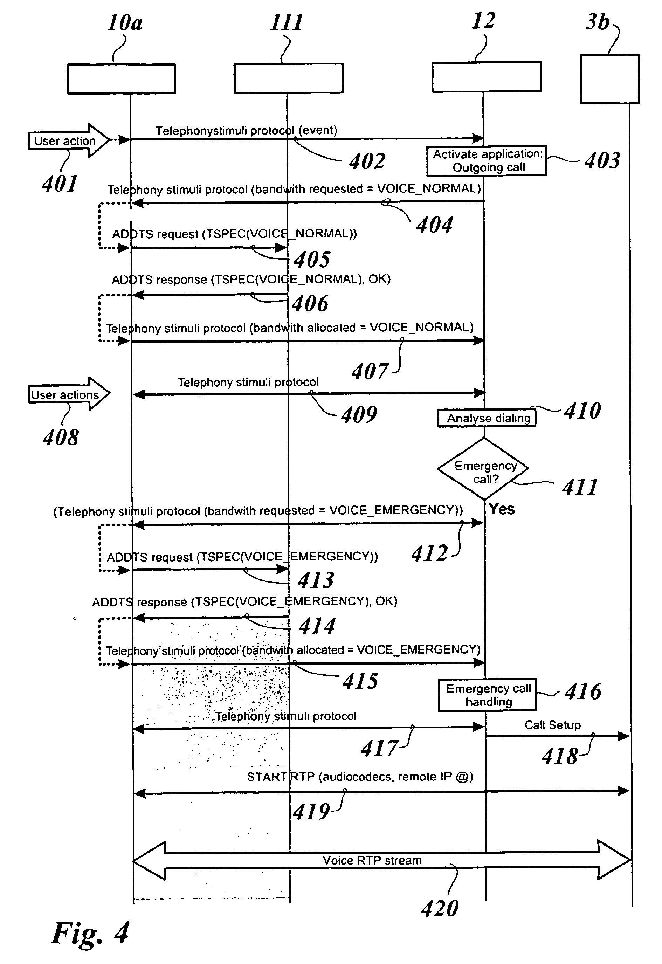

Fig. 4 describes the sequence of messages and actions of an embodiment of the invention regarding the successful bandwidth reservation for an outgoing emergency call. As in the embodiment illustrated in Fig. 3, the process is conducted among a WLAN-compatible calling party's phone 10a, e.g., a VoWLAN phone of the WLAN network 1, a WLAN infrastructure AP 111, a call server 12, and a called party's phone 3b, e.g., a PSTN phone.

The calling party associated with the phone 10a wishes to call the called party in an emergency voice call. The sequence steps 401 to 411 are identical to the steps 301 to 311 as described above and shown in Fig. 3.

In the present embodiment, the analysis and test result is that the telephone number received from the calling party's phone 10a is indeed an emergency number and that the corresponding call to be established is to be handled as an emergency call or high priority call, respectively.

For priority calls, the call server 12 requests the phone 10a to reserve priority bandwidth resources. This priority must be relayed by the phone 10a through the 802.11e TSPEC mechanism.

Accordingly, triggered by the positive emergency test result, a message 412 is sent from the call server 12 via the telephony stimuli protocol to the phone 10a. The message 412 is adapted to cause the phone 10a to request bandwidth corresponding to an emergency voice call from the WLAN infrastructure. Once the message 412 is received at the phone 10a, the phone 10a, triggered by the message 412, sends an ADDTS request 413 regarding the TSPEC corresponding to an emergency call to the AP 111.

The priority setting for a voice priority call in the ADDTS request 413 is not specified. For example, the concept to distinguish a voice priority call in an ADDTS request can be achieved through different ways such as, e.g., by adding a new field, using a specific access category, etc. Also, the existent field "User Priority" with a specific value for "emergency call", e.g., with the value 6 for normal calls and the value 7 for emergency calls, can be used.

After receiving the ADDTS request 413, the AP 111 analyses the current load situation. In the described embodiment, the load situation is low, so the AP 111 issues an ADDTS response 414 which indicates that the ADDTS request has been approved and correspondingly bandwidth has been allocated to an emergency voice call originating from the phone 10a. The phone 10a receives the positive ADDTS response 414 and notifies the call server 12 by means of a message 415 sent via the telephony stimuli protocol that bandwidth has been allocated to the upcoming emergency voice call.

The receipt of the message 415 at the call server 12 activates an application 416 of the call server 12, whereby the application 416 is associated with the handling of an emergency call. The application 416 triggers the call server 12 to initiate the establishment and controlling of an emergency voice call originating from the phone 10a by communication 417 with the phone 10a over the WLAN infrastructure via the telephony stimuli protocol.

The call server 12 also performs a call set-up 418 to the called party's terminal 3b. In the next step, an RTP transmission between the calling party's phone 10a and the called party's phone 3b is initialised by transmitting messages 419 comprising, e.g., audiocodecs for the adjustment of equivalent transmission parameters from the call server 12 to the calling party's phone 10a and the called party's phone 3b and by establishing an RTP communication connection (RTP = Real-Time Transport Protocol). Finally, the call is conducted as voice RTP streams 315 of high priority/emergency status transmitted between the calling party's phone 10a and the called party's phone 3b.

In the infrastructure of the WLAN network 1, the call-related traffic through the WLAN 1 after the message 405, i.e., after the AP 111 receives the request of the normal voice call, and before the message 414 is handled on a "normal voice call" basis. After the message 414, i.e., after the AP 111 acknowledges the reservation of bandwidth for the priority call, the call-related traffic through the WLAN 1 is handled on an "emergency voice call" basis. Before the message 405, the WLAN traffic is handled on a "best effort" basis. The same traffic handling priority pattern and changes apply in a corresponding manner also to the following embodiments.

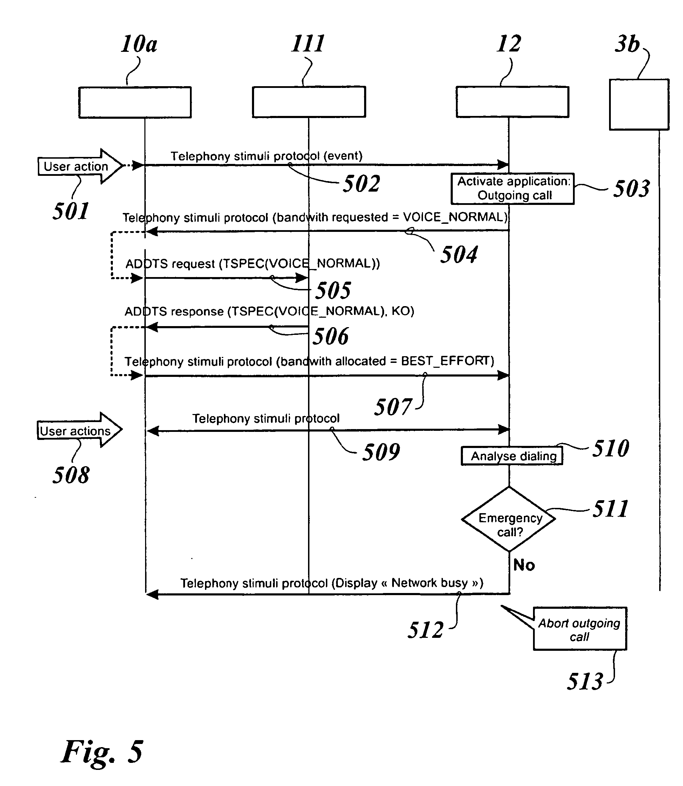

Fig. 5 describes the sequence of messages and actions of an embodiment of the invention regarding the failed bandwidth reservation for an outgoing normal call. As in the embodiment illustrated in Fig. 3, the process is conducted among a WLAN-compatible calling party's phone 10a, e.g., a VoWLAN phone of the WLAN network 1, a WLAN infrastructure AP 111, a call server 12, and a called party's phone 3b, e.g., a PSTN phone.

The calling party associated with the phone 10a wishes to call the called party in a normal voice call. The sequence steps 501 to 505 are identical to the steps 301 to 305 as described above and shown in Fig. 3.

In the described embodiment, the load situation is high so that the AP 111 issues an ADDTS response 506 which indicates that the ADDTS request 505 has been denied and no bandwidth has been allocated to the requested normal voice call originating from the phone 10a. The phone 10a receives the negative ADDTS response 506 and notifies the call server 12 by means of a message 507 sent via the telephony stimuli protocol that bandwidth can only be allocated on a best effort basis to the upcoming normal voice call.

Best effort means that the network controlling facilities cannot give any QoS guaranties for the availability of the transmission resources, the delay and transmission rate of packets. This may be sufficient and cheap for most of the classical network services like FTP, HTTP or email (FTP = File Transfer Protocol; HTTP = Hyper Text Transfer Protocol). VolP applications, however, require higher QoS standards.

As a next step 508, the calling party specifies the address of the called party. The telephone number of the called party is transmitted over a communication connection 509 via the telephony stimuli protocol from the phone 10a to the call server 12. After reception of the telephone number, the call server 12 performs an analysis 510 of the telephone number and performs a test 511 as to whether the telephone number is associated with a high priority call such as an emergency call to the police or the fire department.

In the present embodiment, the analysis and test result is that the telephone number received from the calling party's phone 10a is not an emergency number and that the corresponding call to be established is not an emergency call or high priority call, respectively.

Acordingly, the call server 12 sends a message 512 to the phone 10a over the WLAN infrastructure via the telephony stimuli protocol. The message 512 may cause the phone 10a to display "Network busy" on a screen of the phone 10a or may in another appropriate way notify the calling party about the high load of the WLAN network 1. Accordingly, the call server 12 aborts the outgoing call in step 513.

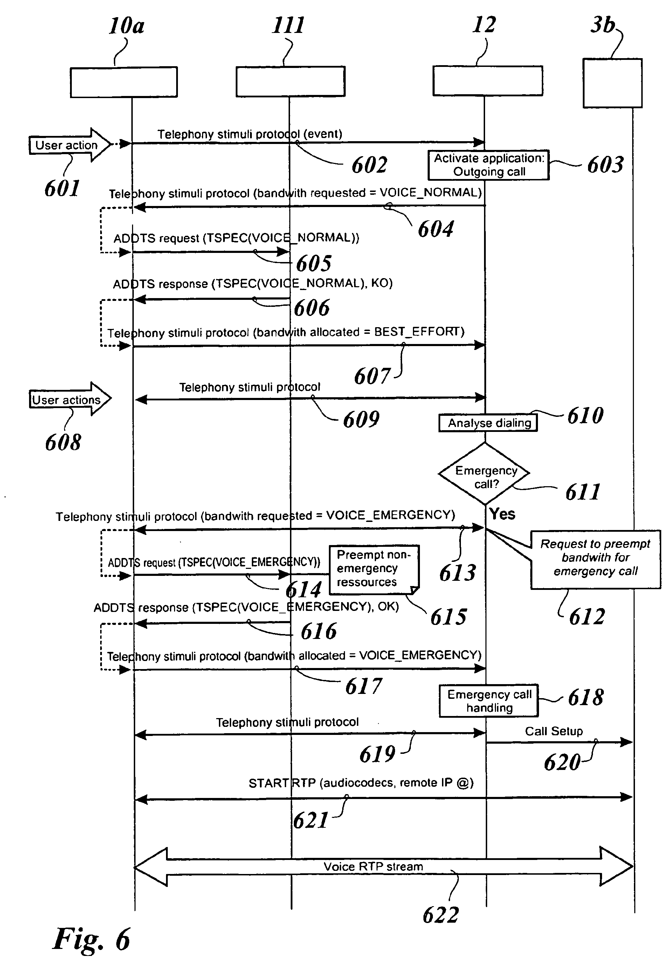

Fig. 6 describes the sequence of messages and actions of an embodiment of the invention regarding the successful preemption of bandwidth resources for an outgoing emergency call. As in the embodiment illustrated in Fig. 5, the process is conducted among a WLAN-compatible calling party's phone 10a, e.g., a VoWLAN phone of the WLAN network 1, a WLAN infrastructure AP 111, a call server 12, and a called party's phone 3b, e.g., a PSTN phone.

The calling party associated with the phone 10a wishes to call the called party in an emergency voice call. The sequence steps 601 to 611 are identical to the steps 501 to 511 as described above and shown in Fig. 5. So far, the requested bandwidth has been denied because of the high network load and only a best-effort service can be delivered.

When the dialled telephone number is tested in step 611 as to whether the telephone number is associated with a high priority call, the analysis result is positive, i.e., the requested call is an emergency call of higher priority with respect to already on-going calls on the network. Initiated by the emergency character of the requested call, an application 612 of the call server 12 issues a request 613 for the preemption of bandwidth for an emergency voice call.

The message 613 is sent from the call server 12 via the telephony stimuli protocol to the phone 10. The message 613 is adapted to cause the phone 10a to request bandwidth corresponding to an emergency voice call from the WLAN infrastructure. Once the message 613 is received at the phone 10a, the phone 10a, triggered by the message 613, sends an ADDTS request 614 regarding the TSPEC corresponding to an emergency call to the AP 111.

At the AP 111, the request 614 is analysed with respect to the current load situation in the network 1. The AP 111 determines that the received bandwidth request 614 has to be handled with high priority since it refers to an emergency call. Since all available bandwidth of the network 1 is already allocated to other calls, bandwidth has to be preempted by the emergency call. The AP 111 starts an application 615 which releases one or more on-going calls of lower priority and reserves the released bandwidth for the upcoming emergency call of the calling party's phone 10a.

Preferably, the AP 111 tags the admitted traffic of the upcoming emergency call with its priority in order not to be preempted for new calls with a lower priority. In general, in a preferred embodiment, the AP 111 always, i.e., independently of the priority of an intended call, tags bandwidth reserved for the call with the corresponding priority tag to prevent undue preemption.

The AP 111 issues an ADDTS response 616 which indicates that the ADDTS request has been approved and correspondingly bandwidth has been preempted for an emergency voice call originating from the phone 10a. The phone 10a receives the positive ADDTS response 616 and notifies the call server 12 by means of a message 617 sent via the telephony stimuli protocol that bandwidth has been allocated to the upcoming emergency voice call.

The receipt of the message 617 at the call server 12 activates an application 618 of the call server 12, whereby the application 618 is associated with the handling of an emergency call. The further steps 619 to 622 are identical to the steps 417 to 420 as described above and shown in Fig. 4

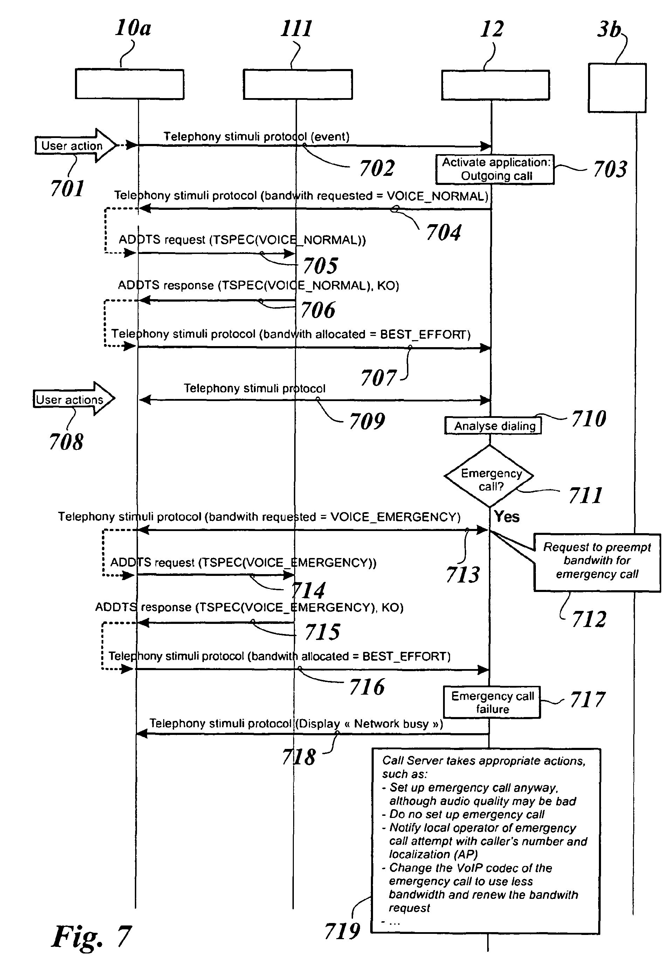

Fig. 7 describes the sequence of messages and actions of an embodiment of the invention regarding the failed preemption of bandwidth resources for an outgoing emergency call. As in the embodiment illustrated in Fig. 6, the process is conducted among a WLAN-compatible calling party's phone 10a, e.g., a VoWLAN phone of the WLAN network 1, a WLAN infrastructure AP 111, a call server 12, and a called party's phone 3b, e.g., a PSTN phone.

The calling party associated with the phone 10a wishes to call the called party in an emergency voice call. The sequence steps 701 to 714 are identical to the steps 601 to 614 as described above and shown in Fig. 6. So far, the phone 10a sends a bandwidth request 714 for an emergency call to the AP 111.

At the AP 111, the request 714 is analysed with respect to the current load situation in the network 1. The AP 111 realises that the received bandwidth request 614 has to be handled with high priority since it refers to an emergency call. However, all calls handled by the AP 111 have the same or an even higher priority as the intended emergency call requested by the calling party's phone 10a. Since all available bandwidth of the network 1 is already allocated to other calls of equal rights, the bandwidth request 714 is denied by the AP 111.

The AP 111 issues an ADDTS response 715 which indicates that the ADDTS request 714 has been denied and no bandwidth has been allocated to the requested emergency voice call originating from the phone 10a. The phone 10a receives the negative ADDTS response 715 and notifies the call server 12 by means of a message 716 sent via the telephony stimuli protocol that bandwidth can only be allocated on a best effort basis to the upcoming emergency voice call.

After reception of the negative message 716, an application 717 of the call server 12 is triggered which is related to the handling of an emergency failure.

As a first reaction to the denial of bandwidth, the call server 12 may send a message 718 to the phone 10a over the WLAN infrastructure via the telephony stimuli protocol. The message 718 may cause the phone 10a to display "Network busy" on a screen of the phone 10a or may in another appropriate way notify the calling party about the high load of the WLAN network 1, e.g., by means of a voice announcement to the calling party. Therefore, the calling party is prepared that the intended emergency call is not handled in the usual manner but that other measures have to be taken.

As a first alternative, the call server 12 may simply abort the call set-up in step 718. In a preferred embodiment, instead of the call server 12 aborting the outgoing emergency call, the call server 12 may set up the emergency call anyway independently of the achievable audio quality. In still another embodiment, the call server 12 may notify a local operator of the emergency call attempt with the calling party's telephone number and localisation information, e.g. the network address of the AP 111 the calling party's phone 10a is associated to. Then, the operator may try to assist the calling party.

In another embodiment, the call server 12 modifies the traffic specification towards the telephone 10a of the first party required for the high priority call, e.g., by changing the VoIP audio codec. By doing this, the bandwidth resources required for the modified priority call may be reduced compared to the bandwidth resources required for the original priority call. Therefore, the bandwidth resources available in the network 1 may be sufficient to provide service to the modified priority call with reduced bandwidth requirements. After the modification is completed, the request procedure as described above and beginning with step 713 is repeated by sending, from the call server 12 to the telephone 10a of the first party, a request to reserve bandwidth for the modified high priority call at the access point 111.

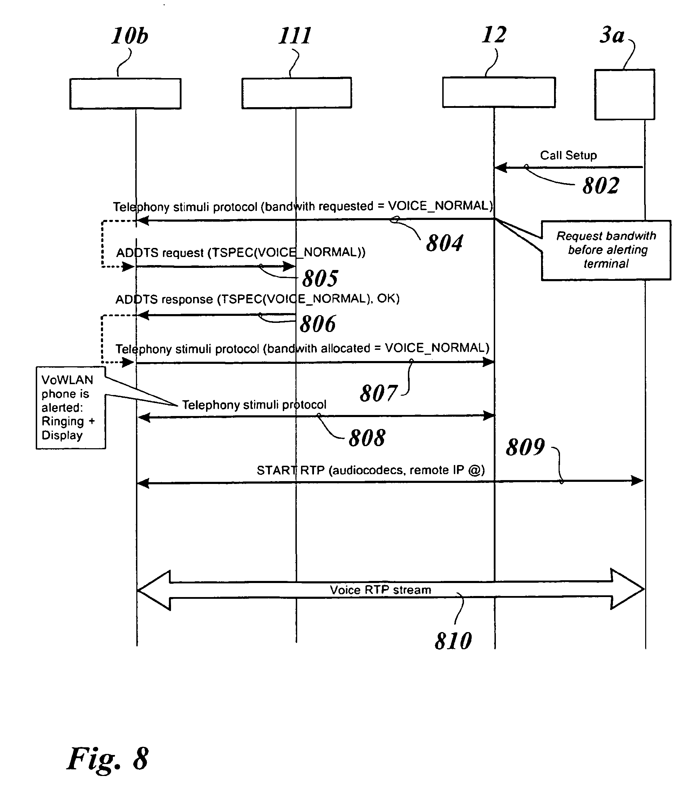

Fig. 8 describes the sequence of messages and actions of an embodiment of the invention regarding a successful bandwidth reservation for an incoming normal call. The process is conducted among a WLAN-compatible called party's phone 10b, e.g., a VoWLAN phone of the WLAN network 1, a WLAN infrastructure AP 111, a call server 12, and a calling party's phone 3a, e.g., a PSTN phone.

The calling party using the phone 3a wishes to call the called party associated with the phone 10b in a normal voice call. The calling party initiates the call setup 802, e.g., by dialling the called party's telephone number assigned to the phone 10b. The call setup request 802 is sent to the call server 12. The receipt of the message 802 at the call server 12 activates an application 803 of the call server 12, whereby the application 803 is associated with a bandwidth request for an incoming call before alerting the called party's phone 10b, e.g., by ringing, displaying a message, vibrating, etc.

The application 803 triggers a message 804 sent from the call server 12 via the telephony stimuli protocol to the phone 10b. The message 804 is adapted to cause the phone 10b to request bandwidth for an incoming normal voice call from the WLAN infrastructure. Once the message 804 is received at the phone 10b, the phone 10b, triggered by the message 803, sends an ADDTS request 805 regarding the TSPEC corresponding to a normal incoming call to the AP 111.

After receiving the ADDTS request 805, the AP 111 analyses the current load situation. In the described embodiment, the load situation is low, so the AP 111 issues an ADDTS response 806 which indicates that the ADDTS request 805 has been approved and corresponding bandwidth has been allocated to the normal voice call waiting in-line at the call server 12. The phone 10b receives the positive ADDTS response 806 and notifies the call server 12 by means of a message 807 sent via the telephony stimuli protocol that bandwidth has been allocated to the upcoming normal voice call originating from the calling party's phone 3a.

As a next step 808, the call server 12 initiates the establishment and the control of a normal voice call originating from the phone 3a by communication 808 with the phone 10b over the WLAN infrastructure via the telephony stimuli protocol which notifies the called party through different ways in the VoWLAN phone (ringing, display of a message, vibrating, etc). In the next step, an RTP transmission between the calling party's phone 3a and the called party's phone 10b is initialised by transmitting messages 809 comprising, e.g., audiocodecs for the adjustment of equivalent transmission parameters from the call server 12 to the calling party's phone 3a and the called party's phone 10b and by establishing an RTP communication connection. Finally, the call is conducted as voice RTP streams 810 of normal priority transmitted between the calling party's phone 3a and the called party's phone 10b.

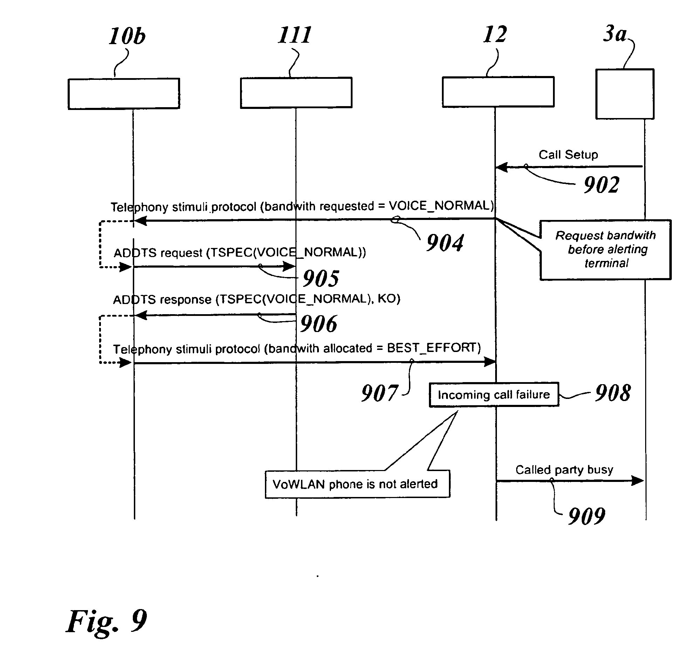

Fig. 9 describes the sequence of messages and actions of an embodiment of the invention regarding a failed bandwidth reservation for an incoming normal call. The process is conducted among a WLAN-compatible called party's phone 10b, e.g., a VoWLAN phone of the WLAN network 1, a WLAN infrastructure AP 111, a call server 12, and a calling party's phone 3a, e.g., a PSTN phone.

The calling party using the phone 3a wishes to call the called party associated with the phone 10b in a normal voice call. The sequence steps 902 to 905 are identical to the steps 802 to 805 as described above and shown in Fig. 8. So far, the called party's phone 10b sends an ADDTS request 905 regarding the TSPEC corresponding to a normal incoming call to the AP 111.

After receiving the ADDTS request 905, the AP 111 analyses the current load situation. In the described embodiment, the load situation is high, so the AP 111 issues an ADDTS response 906 which indicates that the ADDTS request has been denied and no bandwidth has been allocated to the normal voice call waiting in-line at the call server 12. The phone 10b receives the negative ADDTS response 906 and notifies the call server 12 by means of a message 907 sent via the telephony stimuli protocol that bandwidth can only be allocated on a best effort basis to the waiting normal voice call.

Initiated by the negative message 907, an application 908 of the call server 12 issues a message 909 to the calling party's phone 3a. The message 909 may cause the phone 3a to display "Called party busy" on a screen of the phone 3a or may in another appropriate way notify the calling party about the high load of the WLAN network 1. Thus, the incoming waiting call is not forwarded to the called party's phone 10b and the connection between the call server 12 and the calling party's phone 3a is released. Generally, the called party's phone 10b is only alerted if the bandwidth required to establish the voice flow could be allocated. In the present embodiment, the called party's phone 10b is not alerted since the bandwidth required for the call could not be allocated.

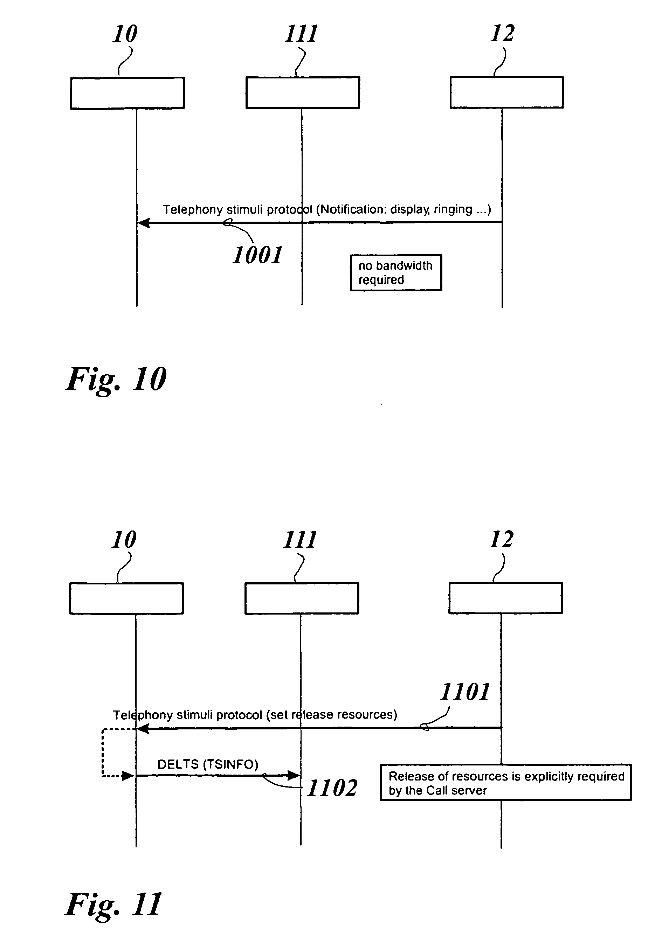

Fig. 10 describes the sequence of messages and actions of an embodiment of the invention regarding a call server notification. The process is conducted among a WLAN-compatible stimuli phone 10, e.g., a VoWLAN phone of the WLAN network 1 and a call server 12.

The stimuli phone 10 is totally under the control of the call server 12: actions on the phone 10 (user actions like key pressing) are reported to the call server 12 and the call server 12 sends commands to the phone 10 to modify the state of the phone 10 (display, audio mode...). The application context is managed by the call server 12. The signaling traffic required to control the phone 10 is not very big and is not real time. So strictly speaking, bandwidth is required but is quite low and does not have to be reserved with traffic specifications and real time constraints as it is required for voice traffic.

For example, the call server 12 may want to update a notification LED on the phone (LED = Light Emitting Diode). This command 1001 can be sent to the phone 10 on a best effort basis.

This is to illustrate that in some cases reserved bandwidth for a voice channel with real time constraints is not necessary and some signaling traffic can be sent as best effort. It is to be noted that an application protocol is required to control the delivery of the data. As the stimuli phone 10 is under the control of the call server 12, it is also the decision of the call server 12 to request a bandwidth reservation or not. Depending of the applicative context, controlled by the call server 12, the traffic specifications may be different (best effort, normal voice call, emergency call...).

Therefore, the message 1001 comprising a notification such as a display update or a ringing signal is transmitted via a telephony stimuli protocol from the call server 12 to the phone 10 on a best effort basis.

Fig. 11 describes the sequence of messages and actions of an embodiment of the invention regarding a release of resources. The process is conducted among a WLAN-compatible phone 10, e.g., a VoWLAN phone of the WLAN network 1, a WLAN infrastructure AP 111, and a call server 12. The release of resources mechanism uses the DELTS frame as defined in the 802.11e and in the WMM specifications from the Wi-Fi alliance (DELTS = delete TSPEC). The release of resources is explicitly required by the call server 12 by message 1101 and relayed by the phone through 802.11e messages 1102 to the WLAN infrastructure 111.

As a summary, the principle for CAC of the present invention is to get the bandwidth required for a call, incoming or outgoing, prior to alert the VoWLAN phone 10 for an incoming call or accept an outgoing call from the VoWLAN phone 10. If the required bandwidth is not available, the call server 12 may take the appropriate actions, e.g., reject a call, redirect an incoming call, log a congestion event, etc.

## Claims

1. A method of providing admission control of a call between a telephone (10) of a first party associated with an access point (111) of a packet-based wireless local area network (1) and a telephone (3) of a second party,
whereby the method comprises the steps of:
receiving, at a call server (12) of the wireless local area network (1), at
least one notification message (302, 402, 502, 602, 702, 802, 902) regarding the intended call;
sending, from the telephone (10) of the first party to the access point (111), a bandwidth request (305, 405, 505, 605, 705, 805, 905) for the call;
processing, at the access point (111), the received bandwidth request (305, 405, 505, 605, 705, 805, 905) in dependence on the current traffic load of the wireless local area network (1);
sending a response (306, 406, 506, 606, 706, 806, 906) to the bandwidth request (305, 405, 505, 605, 705, 805, 905) from the access point (111) to the telephone (10) of the first party;
and
initiating, by the call server (12), the establishment (314, 419, 621, 809) of a call between the telephone (10) of the first party and the telephone (3) of the second party if the requested bandwidth has been allocated to the call,
**characterised in**
**that** the method comprises the further steps of:
sending, from the call server (12) to the telephone (10) of the first party, a request (304, 404, 504, 604, 704, 804, 904) to reserve bandwidth for the call at the access point (111); and
transmitting, from the telephone (10) of the first party to the call server (12), a notification message (307, 407, 507, 607, 707, 807, 907) to notify the call server (12) about the result of the bandwidth reservation.

2. The method of claim 1,
**characterised in**
**that** the method comprises the further steps of:
receiving, at the call server (12) of the wireless local area network (1), address information (309, 409, 509, 609, 709) associated with a destination telephone (3, 10) of the call;
determining, by the call server (12), a priority level of the call based on the received address information (409, 609, 709, 802, 902);
assigning the determined priority level to a request (412, 613, 713, 804, 904) to reserve bandwidth for the call at the access point (111) and
sending said request (412, 613, 713, 804, 904) from the call server (12) to the telephone (10) of the first party;
sending, from the telephone (10) of the first party to the access point (111), a bandwidth request (413, 614, 714, 805, 905) according to the priority level of the call; and
processing, at the access point (111), the received bandwidth request (413, 614, 714, 805, 905) in dependence on the priority level of the call.

3. The method of claim 2,
**characterised in**
**that** the method comprises the further steps of:
preempting, by the access point (111), bandwidth allocated to calls of lower priority than the priority level of the call for the call; and
allocating the preempted bandwidth in the wireless local area network (1) to the call.

4. The method of claim 1,
**characterised in**
**that** the method comprises the further steps of:
modifying, by the call server (12), traffic specifications of the call after receiving the notification message (307, 407, 507, 607, 707, 807, 907) that the bandwidth reservation for the call has been denied by the access point (111); and
sending, from the call server (12) to the telephone (10) of the first party, a request (412, 613, 713, 804, 904) to reserve bandwidth for the call with the modified traffic specifications at the access point (111).

5. The method of claim 1,
**characterised in**
**that** the method comprises the further steps of:
sending, from the call server (12) to the telephone (10) of the first party, a request (1101) to release bandwidth resources allocated to the call at the access point (111);
sending, from the telephone (10) of the first party to the access point (111), a bandwidth release request (1102) for the call;
releasing, by the access point (111), the bandwidth resources allocated to the call; and
terminating the call by the call server (12) after the release of the bandwidth resources allocated to the call by the access point (111).

6. The method of claim 1,
**characterised in**
**that** the method comprises the further steps of:
taking into account, by the telephone (10) of the first party, load information of another access point (112, 113) of the wireless local area network (1) before switching from the current access point (111) to the other access point (112, 113) during a hand-over of the wireless local area network connection processing the call.

7. The method of claim 1,
**characterised in**
**that** the method comprises the further steps of:
processing the communication between the telephone (10) of the first party and the call server (12) via an application layer protocol and the communication between the telephone (10) of the first party and the access point (111) via the 802.11 e standard mechanism

8. A call server (12) of a packet-based wireless local area network (1) arranged for providing admission control of a call between a telephone (10) of a first party associated with an access point (111) of the packet-based wireless local area network (1) and a telephone (3) of a second party, whereby the call server (12) comprises a control unit (121) adapted to receive at least one notification message (302, 402, 502, 602, 702, 802, 902) regarding the intended call, and initiate the establishment (314, 419, 621, 809) of a call between the telephone (10) of the first party and the telephone (3) of the second party if the requested bandwidth has been allocated to the call,
**characterised in**
**that** the control unit (121) is further adapted to send to the telephone (10) of the first party a request (304, 404, 504, 604, 704, 804, 904) to reserve bandwidth for the call at the access point (111) and receive from the telephone (10) of the first party a notification message (307, 407, 507, 607, 707, 807, 907) to notify the call server (12) about the result of the bandwidth reservation.

9. The call server of claim 8,
**characterised in**
**that** the control unit (121) of the call server (12) is adapted to send a notification message (1001) to the telephone (10) of the first party without requirement of bandwidth reservation within the wireless local area network (1).

10. The call server of claim 8,
**characterised in**
**that** the control unit (121) of the call server (12) is adapted to send a notification message (512, 718, 909) to the telephone (10) of the first party and/or the telephone (3) of the second party in case of a call failure.

## Patentansprüche

1. Verfahren zur Bereitstellung der Zulassungssteuerung für einen Anruf zwischen einem Telefon (10) eines einem Zugangspunkt (111) eines paketorientierten drahtlosen lokalen Netzwerks (1) zugeordneten ersten Teilnehmers und einem Telefon (3) eines zweiten Teilnehmers,
wobei dieses Verfahren die folgenden Schritte umfasst:
Empfangen mindestens einer Benachrichtigung (302, 402, 502, 602, 702, 802, 902) zu dem beabsichtigten Anruf an einem Call-Server (12) des drahtlosen Netzwerks (1); Senden einer Bandbreitenanforderung (305, 405, 505, 605, 705, 805, 905) vom Telefon (10) des ersten Teilnehmers an den Zugangspunkt (111);
Verarbeiten der empfangenen Bandbreitenanforderung (305, 405, 505, 605, 705, 805, 905) in Abhängigkeit von der aktuellen Datenverkehrsauslastung des drahtlosen lokalen Netzwerks (1) am Zugangspunkt (111);
Senden einer Antwort (306, 406, 506, 606, 706, 806, 906) auf die Bandbreitenanforderung (305, 405, 505, 605, 705, 805, 905) vom Zugangspunkt (111) an das Telefon (10) des ersten Teilnehmers;
und
Auslösen der Einrichtung (314, 419, 621, 809) eines Anrufs zwischen dem Telefon (10) des ersten Teilnehmers und dem Telefon (3) des zweiten Teilnehmers durch den Call-Server (12), wenn dem Anruf die angeforderte Bandbreite zugeordnet wurde,
**dadurch gekennzeichnet,**
**dass** das Verfahren des Weiteren die folgenden Schritte umfasst:
Senden einer Anforderung (304, 404, 504, 604, 704, 804, 904) vom Call-Server (12) an das Telefon (10) des ersten Teilnehmers zum Reservieren der Bandbreite für den Anruf am Zugangspunkt (111); und
Senden einer Benachrichtigung (307, 407, 507, 607, 707, 807, 907) vom Telefon (10) des ersten Teilnehmers an den Call-Server (12), um den Call-Server (12) über das Ergebnis der Bandbreitenreservierung zu informieren.

2. Verfahren gemäß Anspruch 1,
**dadurch gekennzeichnet,**
**dass** das Verfahren des Weiteren die folgenden Schritte umfasst:
Empfangen von Adressinformationen (309, 409, 509, 609, 709) zu dem Zieltelefon (3, 10) des Anrufs am Call-Server (12) des drahtlosen Netzwerks (1);
Ermitteln einer Prioritätsstufe des Anrufs auf der Basis der empfangenen Adressinformationen (409, 609, 709, 802, 902) durch den Call-Server (12);
Zuordnen der ermittelten Prioritätsstufe zu einer Anforderung (412, 613, 713, 804, 904) zum Reservieren von Bandbreite für den Anruf am Zugangspunkt (111) und Senden dieser Anforderung (412, 613, 713, 804, 904) vom Call-Server (12) an das Telefon (10) des ersten Teilnehmers;
Senden einer Bandbreitenanforderung (413, 614, 714, 805, 905) vom Telefon (10) des ersten Teilnehmers an den Zugangspunkt (111) gemäß der Prioritätsstufe des Anrufs; und
Verarbeiten der empfangenen Bandbreitenanforderung (413, 614, 714, 805, 905) in Abhängigkeit von der aktuellen Prioritätsstufe des Anrufs am Zugangspunkt (111).

3. Verfahren gemäß Anspruch 2,
**dadurch gekennzeichnet, dass** das Verfahren des Weiteren die folgenden Schritte umfasst:
Vorbelegen der Bandbreite, die den Anrufen mit niedrigerer Priorität als der Prioritätsstufe des Anrufs zugeordnet wurde durch den Zugangspunkt (111) für den Anruf; und
Zuordnen der vorbelegten Bandbreite im drahtlosen lokalen Netzwerk (1) zu dem Anruf.

4. Verfahren gemäß Anspruch 1,
**dadurch gekennzeichnet,**
**dass** das Verfahren des Weiteren die folgenden Schritte umfasst:
Ändern der Datenverkehrsspezifikationen des Anrufs durch den Call-Server (12) nach dem Empfangen der Benachrichtigung (307, 407, 507, 607, 707, 807, 907), dass die Bandbreitenreservierung für den Anruf vom Zugangspunkt (111) zurückgewiesen wurde; und
Senden einer Anforderung (412, 613, 713, 804, 904) vom Call-Server (12) an das Telefon (10) des ersten Teilnehmers zum Reservieren der Bandbreite für den Anruf mit den geänderten Datenverkehrsspezifikationen am Zugangspunkt (111).

5. Verfahren gemäß Anspruch 1,
**dadurch gekennzeichnet,**
**dass** das Verfahren des Weiteren die folgenden Schritte umfasst: Senden einer Anforderung (1101) vom Call-Server (12) an das Telefon (10) des ersten Teilnehmers zum Freigeben von Bandbreitenressourcen für den Anruf am Zugangspunkt (111);
Senden einer Anforderung zur Bandbreitenfreigabe (1102) vom Telefon (10) des ersten Teilnehmers an den Zugangspunkt (111);
Freigeben der dem Anruf zugeordneten Bandbreitenressourcen durch den Zugangspunkt (111); und
Beenden des Anrufs durch den Call-Server (12) nach der Freigabe der dem Anruf vom Zugangspunkt (111) zugeordneten Bandbreitenressourcen.

6. Verfahren gemäß Anspruch 1,
**dadurch gekennzeichnet,**
**dass** das Verfahren des Weiteren die folgenden Schritte umfasst:
Berücksichtigen der Auslastungsinformationen eines weiteren Zugangspunkts (112, 113) des drahtlosen lokalen Netzwerks (1) durch das Telefon (10) des ersten Teilnehmers vor dem Umschalten vom aktuellen Zugangspunkt (111) zum anderen Zugangspunkt (112, 113) bei einem Netzwerkwechsel der drahtlosen Netzwerkverbindung, die den Anruf verarbeitet.

7. Verfahren gemäß Anspruch 1,
**dadurch gekennzeichnet,**
**dass** das Verfahren des Weiteren die folgenden Schritte umfasst: Verarbeiten der Kommunikation zwischen dem Telefon (10) des ersten Teilnehmers und dem Call-Server (12) über ein Protokoll der Anwendungsschicht und der Kommunikation zwischen dem Telefon (10) des ersten Teilnehmers und dem Zugangspunkt (111) über den 802.11e Standardmechanismus.

8. Call-Server (12) eines paketorientierten drahtlosen lokalen Netzwerks (1), das für die Bereitstellung einer Rufzulassungssteuerung eines Anrufs zwischen einem Telefon (10) eines ersten einem Zugangspunkt (111) des paketorientierten drahtlosen lokalen Netzwerks (1) zugeordneten Teilnehmers und einem Telefon (3) eines zweiten Teilnehmers bereitgestellt wurde, wobei der Call-Server (12) eine Steuerungseinheit (121) umfasst, die so angepasst wurde, dass sie mindestens eine Benachrichtigung (302, 402, 502, 602, 702, 802, 902) zu dem beabsichtigten Anruf empfängt und die Einrichtung (314, 419, 621, 809) eines Anrufs zwischen dem Telefon (10) des ersten Teilnehmers und dem Telefon (3) des zweiten Teilnehmers einleitet, wenn die angeforderte Bandbreite dem Anruf zugeordnet wurde,
**dadurch gekennzeichnet,**
**dass** die Steuerungseinheit (121) des Weiteren so angepasst wurde, dass sie eine Anforderung (304, 404, 504, 604, 704, 804, 904) zur Reservierung von Bandbreite für den Anruf am Zugangspunkt (111) an das Telefon (10) des ersten Teilnehmers sendet und vom ersten Telefon (10) des ersten Teilnehmers eine Benachrichtigung (307, 407, 507, 607, 707, 807, 907) empfängt, um den Call-Server (12) über das Ergebnis der Bandbreitenreservierung zu benachrichtigen.

9. Call-Server gemäß Anspruch 8,
**dadurch gekennzeichnet,**
**dass** die Steuerungseinheit (121) des Call-Servers (12) so angepasst ist, dass sie ohne Anforderung einer Bandbreitenreservierung eine Benachrichtigung (1001) an das Telefon (10) des ersten Teilnehmers sendet.

10. Call-Server gemäß Anspruch 8,
**dadurch gekennzeichnet,**
**dass** die Steuerungseinheit (121) des Call-Servers (12) so angepasst ist, dass sie bei einem Fehlschlagen des Anrufs eine Benachrichtigung (512, 718, 909) an das Telefon (10) des ersten Teilnehmers und/oder an das Telefon (3) des zweiten Teilnehmers sendet.

## Revendications

1. Procédé de contrôle d'admission des appels entre un téléphone (10) d'une première partie associée à un point d'accès (111) d'un réseau local sans fil à commutation de paquets (1) et un téléphone (3) d'une seconde partie,
dans lequel le procédé comprend les étapes suivantes :
la réception, au niveau d'un serveur d'appels (12) du réseau local sans fil (1), d'au moins un message de notification (302, 402, 402, 502, 602, 702, 802, 902) concernant l'appel souhaité ;
l'envoi, du téléphone (10) de la première partie au point d'accès (111), d'une demande de bande passante (305, 405, 505, 605, 705, 805, 905) pour l'appel ;
le traitement, au niveau du point d'accès (111), de la demande de bande passante reçue (305, 405, 505, 605, 705, 805, 905) en fonction de la charge courante de trafic du réseau local sans fil (1) ;
l'envoi d'une réponse (306, 406, 506, 606, 706, 806, 906) à la demande de bande passante (305, 405, 505, 605, 705, 805, 905) du point d'accès (111) au téléphone (10) de la première partie ;
et
l'initiation, par le serveur d'appels (12), de l'établissement (314, 419, 621, 809) d'un appel entre le téléphone (10) de la première partie et le téléphone (3) de la seconde partie si la bande passante demandée a été allouée à l'appel,
**caractérisé en ce que**
le procédé comprend en outre les étapes suivantes :
l'envoi, du serveur d'appels (12) au téléphone (10) de la première partie, d'une demande (304, 404, 504, 604, 704, 804, 904) de réservation de bande passante pour l'appel au niveau du point d'accès (111) ; et
la transmission, du téléphone (10) de la première partie au serveur d'appels (12), d'un message de notification (307, 407, 507, 607, 707, 807, 907) pour notifier le serveur d'appels (12) du résultat de la réservation de bande passante.

2. Procédé selon la revendication 1, **caractérisé en ce que** le procédé comprend en outre les étapes suivantes :
la réception, au niveau du serveur d'appels (12) du réseau local sans fil (1), d'informations d'adresse (309, 409, 509, 609, 709) associées à un téléphone de destination (3, 10) de l'appel ;
la détermination, par le serveur d'appels (12), d'un niveau de priorité de l'appel sur la base des informations d'adresse reçues (309, 409, 509, 609, 709, 802, 902);
l'assignation du niveau de priorité déterminé à une demande (412, 613, 713, 804, 904) de réservation de bande passante pour l'appel au niveau du point d'accès (111) et l'envoi de ladite demande (412, 613, 713, 804, 904) du serveur d'appels (12) au téléphone (10) de la première partie ;
l'envoi, du téléphone (10) de la première partie au point d'accès (111), d'une demande de bande passante (413, 614, 714, 805, 905) en fonction du niveau de priorité de l'appel ; et
le traitement, au niveau du point d'accès (111), de la demande de bande passante reçue (413, 614, 714, 805, 905) en fonction du niveau de priorité de l'appel.

3. Procédé selon la revendication 2, **caractérisé en ce que** le procédé comprend en outre les étapes suivantes :
la préemption, par le point d'accès (111), de la bande passante allouée à des appels à priorité moindre que le niveau de priorité de l'appel pour l'appel ; et
l'allocation de la bande passante préemptée dans le réseau local sans fil (1) à l'appel.

4. Procédé selon la revendication 1, **caractérisé en ce que** le procédé comprend en outre les étapes suivantes :
la modification, par le serveur d'appels (12) des spécifications de trafic de l'appel après réception du message de notification (307, 407, 507, 607, 707, 807, 907) indiquant que la réservation de bande passante pour l'appel a été refusée par le point d'accès (111) ; et
l'envoi, depuis le serveur d'appels (12), au téléphone (10) de la première partie, d'une demande (412, 613, 713, 804, 904) de réservation de bande passante pour l'appel avec les spécifications de trafic modifiées au niveau du point d'accès (111).

5. Procédé selon la revendication 1, **caractérisé en ce que** le procédé comprend en outre les étapes suivantes :
l'envoi, depuis le serveur d'appels (12), au téléphone (10) de la première partie, d'une demande (1101) de libération des ressources de bande passante allouées à l'appel au niveau du point d'accès (111) ;
l'envoi, du téléphone (10) de la première partie au point d'accès (111), d'une demande de libération de bande passante (1102) pour l'appel ;
la libération, par le point d'accès (111), des ressources de bande passante allouées à l'appel ; et
la terminaison de l'appel par le serveur d'appels (12) après la libération des ressources de bande passante allouées à l'appel par le point d'accès (111).

6. Procédé selon la revendication 1, **caractérisé en ce que** le procédé comprend en outre les étapes suivantes :
la prise en compte, par le téléphone (10) de la première partie, de l'information de charge d'un autre point d'accès (112, 113) du réseau local sans fil (1) avant de commuter du point d'accès courant (111) à l'autre point d'accès (112, 113) pendant un transfert de la connexion de réseau local sans fil qui traite l'appel.

7. Procédé selon la revendication 1, **caractérisé en ce que** le procédé comprend en outre les étapes suivantes :
le traitement de la communication entre le téléphone (10) de la première partie et le serveur d'appels (12) via un protocole de couche application et la communication entre le téléphone (10) de la première partie et le point d'accès (111) via le mécanisme de la norme 802.11e.

8. Serveur d'appels (12) d'un réseau local sans fil à commutation de paquets (1) agencé pour contrôler l'admission des appels entre un téléphone (10) d'une première partie associée à un point d'accès (111) du réseau local sans fil à commutation de paquets (1) et un téléphone (3) d'une seconde partie, dans lequel le serveur d'appels (12) comprend une unité de commande (121) adaptée pour recevoir au moins un message de notification (302, 402, 502, 602, 702, 802, 902) concernant l'appel souhaité, et initier l'établissement (314, 419, 621, 809) d'un appel entre le téléphone (10) de la première partie et le téléphone (3) de la seconde partie si la bande passante demandée a été allouée à l'appel,
**caractérisé en ce que** l'unité de commande (121) est en outre adaptée pour envoyer au téléphone (10) de la première partie une demande (304, 404, 504, 604, 704, 804, 904) de réservation de bande passante pour l'appel au niveau du point d'accès (111) et recevoir du téléphone (10) de la première partie un message de notification (307, 407, 507, 607, 707, 807, 907) pour notifier le serveur d'appels (12) du résultat de la réservation de bande passante.

9. Serveur d'appels selon la revendication 8, **caractérisé en ce que**
l'unité de commande (121) du serveur d'appels (12) est adaptée pour envoyer un message de notification (1001) au téléphone (10) de la première partie sans exiger une réservation de bande passante dans le réseau local sans fil (1).

10. Serveur d'appels selon la revendication 8, **caractérisé en ce que**
l'unité de commande (121) du serveur d'appels (12) est adaptée pour envoyer un message de notification (512, 718, 909) au téléphone (10) de la première partie et/ou au téléphone (3) de la seconde partie en cas d'échec de l'appel.
